# EUROPÄISCHE PATENTANMELDUNG

(11) **EP 4 700 364 A1**
(43) Veröffentlichungstag der Anmeldung: **25.02.2026**
(21) Anmeldenummer: 24195974.1
(22) Anmeldetag: 22.08.2024
(51) Int. Cl.: G01N 21/03, G01N 21/11, G01N 21/13, G01N 21/25, G01N 35/00, G01N 21/64, G01N 21/51

(54) **VERFAHREN ZUR ANALYSE EINER PROBE IN EINER KÜVETTE, KÜVETTE, PIPETTIERVORRICHTUNG UND LABORAUTOMAT ZUR DURCHFÜHRUNG DES VERFAHRENS**

(71) Anmelder: Hombrechtikon Systems Engineering AG, 8634 Hombrechtikon (CH)
(72) Erfinder: Quintel, Harald, 8266 Steckborn (CH); Lutze, Konstantin, 8713 Uerikon (CH)
(74) Vertreter: IPS Irsch AG

(57) **Zusammenfassung**

Die Erfindung betrifft ein Verfahren zur Analyse einer fluiden Probe (71) mittels Strahlung. Das Verfahren umfasst das Bereitstellen einer Küvette (1) umfassend einen Küvettenkörper (10) mit einem Innenraum (14) zur Aufnahme der fluiden Probe (71), sowie einer oberen Öffnung (11) zum Einfüllen und Entnehmen der fluiden Probe (71), und einer unteren Öffnung (12) zur Analyse der fluiden Probe (71) mittels der Strahlung. Ausserdem umfasst das Verfahren das Einbringen der fluiden Probe (71) in den Innenraum (14), das Bestrahlen der fluiden Probe (71) mit einer Primärstrahlung (81) und das Analysieren der fluiden Probe (71) durch Aufnahme einer von der fluiden Probe (71) stammenden Sekundärstrahlung (82) mittels einer Detektionsvorrichtung (8).

## Beschreibung

Die Erfindung betrifft ein Verfahren zur Analyse einer fluiden Probe, eine Küvette sowie eine Pipettiervorrichtung zur Durchführung des Verfahrens, und einen Laborautomaten gemäss den Oberbegriffen der unabhängigen Ansprüche.

Im Stand der Technik werden Analysen von flüssigen Proben unter anderem mit einem Spektrometer oder Photometer oder anderen optischen Detektionsvorrichtungen durchgeführt. Derartige Analysen erfolgen unter anderem bei molekularbiologischen, biochemischen, anorganisch-chemischen, organisch-chemischen und lebensmittelchemischen Anwendung.

Proben werden insbesondere in der Forschung, in der Diagnostik und in der Qualitätskontrolle optisch analysiert. Sie werden zum Beispiel mittels Absorptions-, Reflexions-, Emissions-, Fluoreszenz-, Raman- oder Lumineszenzspektroskopie im UV-VIS oder IR-Wellenlängenbereich analysiert. Dabei werden unter anderem Biomoleküle wie Nukleinsäuren, Proteine, Lipide sowie anorganische oder organische Stoffe und Verbindungen analysiert.

Zur Analyse der flüssigen Proben werden dabei häufig Küvetten verwendet, welche in Detektionsvorrichtungen wie in Absorptionsphotometer eingesetzt werden. Für die Analyse werden die flüssigen Proben in den Innenraum der Küvetten gefüllt, welche in der Regel einen Messbereich aufweisen. Absorptionsphotometer können zum Beispiel die Transmission sowie Absorption (Extinktion) einer Probe messen. Aus der Messung dieser Grössen lassen sich Rückschlüsse auf die qualitative oder quantitative Zusammensetzung der Probe ziehen sowie Konzentrationen bestimmen. Die bei der Analyse in Küvetten verwendete Strahlung, liegt insbesondere im Bereich des sichtbaren Lichts, im IR- oder UV-Bereich. Die Auswahl hängt dabei in der Regel von der zuanalysierenden fluide Probe ab. Die Materialauswahl der Küvette richtet sich nach dem Wellenlängenbereich der verwendeten Strahlung. Der Wellenlängenbereich kann durch Farb- oder Interferenzfilter ausgewählt werden, oder indem das Licht einer Bestrahlungseinrichtung mittels eines Monochromators zerlegt wird.

Ein wesentlicher Einsatzbereich für Küvetten ist die Analyse von Proben in geringen Mengen, da oft nur geringe Probenmengen (z. B. 1 bis 5 Mikroliter) zur Verfügung, weil es nicht möglich ist eine grössere Menge der Probe bereitzustellen. Eine bekannte Anwendung ist dabei die Analyse von Nukleinsäure-Konzentrationen vor einer PCR oder Real-Time-PCR, um die für die PCR optimale Ausgangsmenge der Nukleinsäure einsetzen zu können.

Ein weiteres Beispiel ist die Messung der Konzentration von Biomolekülen, welche durch Fluoreszenz-Marker erfolgt. Insbesondere bei Biomolekülen ist die Lumineszenz-Spektroskopie dabei eine wichtige Analysemethode, bei welcher das Emissionslicht, welches auf Basis einer Photonenabsorption der Biomoleküle entsteht, ausgewertet wird. Insbesondere an grosse Biomoleküle können hierfür durch eine Fluoreszenzmarkierung fluoreszierende chemische Gruppen angehängt werden, die dann als Marker für dieses Biomolekül dienen.

Bei vielen Prozessen spielt insbesondere die Konzentration der fluiden Proben (also der relevanten Moleküle in Lösung) für die weitere Verarbeitung eine Rolle, welche insbesondere durch die Fluoreszenz-Spektroskopie einfach zu bestimmen ist. Auch die optische Dichte (Mass für die Abschwächung einer Strahlung nach Durchqueren eines Mediums) kann für die Bestimmung der Konzentration verwendet werden.

Standardküvetten sind für den Einsatz in die Küvettenschächte der meisten gängigen Spektrometer und Photometer geeignet und haben dafür einen Querschnitt von 12,5 mm × 12,5 mm. Die Weglänge für die Strahlung beträgt in der Regel um die 10 mm. Für geringe Probenmengen gibt es jedoch Mikroküvetten, welche eine Weglänge von 0,2 bis 1mm aufweisen und nur mit wenigen Mikrolitern befüllt werden.

Einmalküvetten sind meist aus Materialien wie Polystyrol oder Polymethylmethacrylat, welche eine optimale Durchlässigkeit für Strahlung mit einer Wellenlänge von 250 bis 800 nm aufweisen. Wiederverwendbare Küvetten sind in der Regel aus Borosilikatglas oder Quarzglas.

Problematisch ist, dass die Küvetten zur Analyse in Küvettenschächte eingesetzt werden müssen, beziehungsweise die Küvetten zumindest vereinzelt werden müssen. Zudem ist eine Rückgewinnung kostbarer Proben nach der Messung nicht ohne Risiko einer Kontamination möglich.

Bei der Verarbeitung einer Vielzahl von Proben muss eine Vielzahl von Bearbeitungsschritten durchgeführt werden, um die Analyse zu ermöglichen. Die Analyse der fluiden Proben in den Detektionsvorrichtungen ist daher in der Regel sehr zeitaufwendig und wenig flexibel.

Aufgabe der Erfindung ist es deshalb ein Verfahren zur Analyse einer fluiden Probe, eine Küvette sowie eine Pipettiervorrichtung zur Durchführung des Verfahrens, und einen Laborautomaten bereitzustellen, welche die aus dem Stand der Technik bekannten nachteiligen Wirkungen vermeiden. Insbesondere soll eine flexible und / oder schnelle Analyse von fluiden Proben ermöglicht werden.

Die Aufgabe wird durch ein Verfahren zur Analyse einer fluiden Probe, eine Küvette sowie eine Pipettiervorrichtung zur Durchführung des Verfahrens, und einen Laborautomaten mit den Merkmalen der unabhängigen Ansprüche gelöst.

Die abhängigen Ansprüche beziehen sich auf besonders vorteilhafte Ausführungsformen der Erfindung.

Erfindungsgemäss wird ein Verfahren zur Analyse einer fluiden Probe mittels Strahlung vorgeschlagen. Dabei wird eine Küvette umfassend einen Küvettenkörper mit einem Innenraum zur Aufnahme der fluiden Probe, sowie eine obere Öffnung zum Einfüllen und Entnehmen von Probenflüssigkeit wie der fluiden Probe, und eine untere Öffnung zur Analyse der fluiden Probe mittels der Strahlung bereitgestellt. Die fluide Probe wird in den Innenraum des Küvettenkörpers beziehungsweise der Küvette eingebracht und die fluide Probe mit einer Primärstrahlung bestrahlt. Zudem wird die fluide Probe durch Aufnahme einer von der fluiden Probe stammenden Sekundärstrahlung über die untere Öffnung und / oder die obere Öffnung mittels einer Detektionsvorrichtung analysiert.

Durch Verwendung einer oberen und unteren Öffnung bei der Analyse wird insbesondere eine einfache Probenrückgewinnung gewährleistet sowie eine flexible Verarbeitung ermöglicht.

In einem Ausführungsbeispiel der Erfindung wird die Detektionsvorrichtung derart an der unteren Öffnung angeordnet, dass die Sekundärstrahlung durch die untere Öffnung aufgenommen wird. Hierbei kann die Küvette von der Seite mittels einer Strahlungsquelle angestrahlt werden, sodass zum Beispiel die Streuung von unten mittels der Detektionsvorrichtung beobachtet werden kann. Hierfür kann die untere Öffnung an einer Bodenfläche der Küvette angeordnet sein. Ausserdem kann eine seitliche Wand des Küvettenkörpers ein Messfenster aufweisen, durch welches die Bestrahlung erfolgt. Alternativ kann für eine Absorptionsmessung von oben bestrahlt werden.

Die Strahlungsquelle und die Detektionsvorrichtung können also getrennte Vorrichtungen sein, aber auch in eine Vorrichtung integriert sein. Insbesondere kann die Strahlungsquelle also ein Teil der Detektionsvorrichtung sein. Dabei kann die Analyse das Bestrahlen der fluiden Probe mit der Primärstrahlung mittels der Strahlungsquelle der Detektionsvorrichtung und das Aufnehmen der von der fluiden Probe stammenden Sekundärstrahlung mittels eines Detektors der Detektionsvorrichtung umfassen. Bei der Analyse kann insbesondere eine Konzentration der fluiden Probe anhand der Sekundärstrahlung bestimmt werden.

In Ausführung der Erfindung kann die Küvette oder zumindest ein Teil der Küvette (wie zum Beispiel ein Messbereich der Küvette) optisch transparent sein. Hierfür kann die Küvette oder der Teil der Küvette aus einem amorphen Polymer bestehen beziehungsweise ein amorphes Polymer umfassen. Die Küvette kann insbesondere einen Kunststoff umfassen, im speziellen aus Cycloolefin-Copolymer bestehen. Cycloolefin-Copolymere werden in der Regel durch metallocen-katalysierte Copolymerisation von Cycloolefinen mit Alk-1-enen gewonnen. Im Gegensatz zu teilkristallinen Polymeren wie Polyethylen und Polypropylen sind Cycloolefin-Copolymere amorph und damit optisch transparent. Durch die geringe Doppelbrechung und optisch Transparenz können die Cycloolefin-Copolymere besonders bevorzugt für eine optische Analysen (mit der Detektionsvorrichtung) verwendet werden. Alternativ können auch die im vorgenannten im Stand der Technik bekannten Materialien verwendet werden.

Im Rahmen der Erfindung bedeutet optisch transparent, dass die Küvette (zumindest in einem Bereich des Messfensters) durchlässig für elektromagnetische Wellen / Strahlung ist, insbesondere für elektromagnetische Wellen / Strahlung im UV/Vis-Bereich und / oder NIR-Bereich beziehungsweise für die Primärstrahlung.

In einer weiteren Ausführung der Erfindung kann die fluide Probe in den Innenraum des Küvettenkörpers beziehungsweise der Küvette eingebracht werden, wobei jedoch bereits ein Farbstoff (wie ein im Stand der Technik bekannter Fluoreszenz-Marker) in den Innenraum vorgelegt wurde. Die Küvette könnte aber auch mit irgendeinem Reagenz, insbesondere einer lyophilisierten Reagenz vorbefüllt sein. Dabei kann eine kinetische Reaktion beobachtet werden oder die Fluoreszenz während des Mischens analysiert werden, um zu überprüfen, ob eine Durchmischung vollständig ist (wenn sich das Signal nicht mehr ändert).

Im Rahmen der Erfindung kann unter dem Begriff «fluide Probe» insbesondere eine Probe verstanden werden, welche eine Flüssigkeit mit Substanzen wie Biomolekülen (unter anderem DNS, RNS, Nukleinsäuren, Proteine, Zellen und Zellbestandteile, Monomere) oder anderen chemischen Substanzen umfasst.

Eine Flüssigkeit kann im Rahmen der Erfindung zum Beispiel ein geeignetes Lösungsmittel sein, welches insbesondere Wasser umfasst.

Wie vorangehend erwähnt, kann die Detektionsvorrichtung eine Strahlungsquelle zur Bestrahlung der fluiden Probe mit einer Primärstrahlung und einen Detektor zur Aufnahme einer von der fluiden Probe stammenden Sekundärstrahlung umfassen (zur Analyse der fluiden Probe). Die Strahlungsquelle erzeugt also eine elektromagnetische Strahlung (die Primärstrahlung). Die Sekundärstrahlung ist insbesondere eine von der fluiden Probe emittierte / stammende elektromagnetischen Sekundärstrahlung, welche Sekundärstrahlung durch eine Wechselwirkung der Primärstrahlung mit der fluiden Probe induziert ist.

Hierbei wird als Primärstrahlung besonders bevorzugt UV/Vis-Strahlung und / oder NIR-Strahlung, insbesondere im Wellenlängenbereich von 190-1200nm, insbesondere 190-1000nm, im speziellen 365-720nm verwendet. Als Detektor eignet sich hierbei insbesondere eine Diode, insbesondere eine Silizium-Photodiode oder eine Vakuumphotodiode. Als Strahlungsquellen können ein Laser, eine Deuteriumlampe, eine Wolframlampe, eine Halogenlampe, eine Quecksilber-Dampf Lampe oder eine LED (Leuchtdiode) verwendet werden.

Es ist jedoch auch möglich, dass die Strahlungsquelle normales Licht wie Sonnenlicht ist, durch welches die Probe analysiert wird. Besonders bevorzugt kann die Detektionsvorrichtung dabei eine Kamera sein. Mit der Kamera kann zum Beispiel eine fluide Probe mit Zellen analysiert werden, wobei eine Bewegung der Zellen, insbesondere ein Absinken der Zellen auf einen Träger beobachtet wird. Dabei kann der Träger an der unteren Öffnung (bevorzugt am Boden der Küvette) angeordnet werden, wobei sich die Zellen auf den Träger absetzen. Es kann aber auch eine Adhäsion von Zellen oder anderen Analyten beobachtet werden.

In der Praxis kann die Detektionsvorrichtung auch eine Vielzahl von Detektoren und / oder Strahlungsquellen umfassen. Die Strahlungsquellen können dabei verschiedene Wellenlängen oder Wellenlängenbereiche als Primärstrahlung ausstrahlen. Besonders bevorzugt ist hierbei die Verwendung von zwei Strahlungsquellen, welche als eine erste Strahlungsquelle (vorzugsweise erste LED) mit einer ersten Wellenlänge (z.B. 450-490nm) und eine zweite Strahlungsquelle (vorzugsweise zweite LED) mit einer zweiten Wellenlänge (z.B. 600-630nm) ausgestaltet sind. Ist eine Vielzahl von Strahlungsquellen vorhanden, kann die Analyse konfokal erfolgen. Die Strahlengänge der Primärstrahlung von den verschiedenen Strahlungsquellen werden also auf einen gemeinsamen Brennpunkt in der fluiden Probe gerichtet.

Die Detektionsvorrichtung kann insbesondere auch ein Photometer, insbesondere ein Spektrometer, im speziellen ein Fluorometer sein. Das Fluorometer misst die Parameter der Fluoreszenz der fluiden Probe: Intensität und Wellenlängenverteilung des Emissionsspektrums (der Sekundärstrahlung) nach Anregung durch die Primärstrahlung.

Als Messprinzip kann im Rahmen der Erfindung jedoch besonders bevorzugt auch eine Absorptionsmessung verwendet werden, wobei die Strahlungsquelle Primärstrahlung im UV/Vis-Bereich und / oder NIR-Bereich (insbesondere einer einzigen Wellenlänge, wie z.B. 280nm) erzeugt und der durch den Durchgang durch die Probe und die Verlängerung geschwächte Lichtstrahl (Sekundärstrahlung) mittels des Detektors erfasst wird. Zur Charakterisierung der Absorptionsintensität wird hierbei bevorzugt die Extinktion oder optische Dichte (Mass für Abschwächung der Primärstrahlung in einem Medium (Probe und Verlängerung)) verwendet. Hierfür kann Detektionsvorrichtung derart an der oberen Öffnung angeordnet werden, dass die Sekundärstrahlung durch die obere Öffnung aufgenommen wird. Die Strahlungsquelle kann dann an der gegenüberliegenden unteren Öffnung angeordnet werden und die fluide Probe bestrahlen. Selbstverständlich ist auch eine inverse Anordnung möglich.

In Ausführung der Erfindung kann eine Vielzahl von Küvetten bereitgestellt werden und die Vielzahl der Küvetten zur Analyse in einer Halterung angeordnet werden, wobei die Detektionsvorrichtung derart von unten an die Vielzahl der Küvetten geführt wird, dass die Sekundärstrahlung durch die untere Öffnung aufgenommen wird. Dabei kann insbesondere auch das Bestrahlen von unten erfolgen. Hierdurch wird es ermöglicht, dass einfach viele Proben (insbesondere auch gleichzeitig) analysiert werden können, ohne dass ein zeitaufwendiges Separieren und Einbringen in eine Detektionsvorrichtung notwendig ist.

Die Halterung kann ein für die Strahlung durchlässiges Trägerelement umfassen, und die Küvette kann mit der unteren Öffnung derart auf dem Trägerelement angeordnet werden, dass die Detektionsvorrichtung zur Aufnahme der Sekundärstrahlung an dem Trägerelement angeordnet wird. Das Trägerelement kann dem vorangehend erwähnten Träger entsprechend und insbesondere ein optisch transparenter Objektträger sein.

In Ausführung des erfindungsgemässen Verfahrens kann die Küvette zum Einbringen der fluiden Probe in den Innenraum mit der oberen Öffnung an einer Pipettiervorrichtung angeordnet werden und die fluide Probe durch die Pipettiervorrichtung in den Innenraum eingebracht werden. Dabei kann die Küvette (insbesondere der Küvettenkörper) auch über ein Aufnahmeelement an der oberen Öffnung verfügen, mittels welchem die Küvette an der Pipettiervorrichtung (insbesondere einem Adapter für Pipettenspitzen der Pipettiervorrichtung) oder einer Pipettenspitze abnehmbar angebracht werden kann. So wird ein Transport der Küvette mittels der Pipettiervorrichtung ermöglicht. Alternativ kann die Küvette auch durch eine Transportvorrichtung an dem Aufnahmeelement aufgenommen werden. Die Küvette kann mittels der Pipettiervorrichtung oder der Transportvorrichtung zur Detektionsvorrichtung bewegt werden. Alternativ kann die Küvette an dem Aufnahmeelement durch die Detektionsvorrichtung und / oder die Strahlungsquelle aufgenommen werden, um von oben zu bestrahlen und / oder analysieren.

In der Praxis kann die fluide Probe durch einen Druck oder eine Kapillarkraft im Innenraum gehalten werden (sodass sie nicht durch die untere Öffnung abfliesst). Der Druck kann durch eine Vorrichtung wie eine Pumpe oder die Pipettiervorrichtung erzeugt werden.

Erfindungsgemäss wird weiter eine Küvette zur Durchführung des erfindungsgemässen Verfahrens vorgeschlagen. Die Küvette umfasst dabei den Küvettenkörper mit dem Innenraum zur Aufnahme der fluiden Probe sowie die obere Öffnung zum Einfüllen und Entnehmen von Probenflüssigkeit und die untere Öffnung zur Durchführung der Analyse der fluiden Probe mittels der Strahlung. Die untere Öffnung kann an dem Boden (insbesondere einer Abstellfläche) des Küvettenkörpers angeordnet sein oder an einer Seitenwand / einer Seite des Küvettenkörpers.

Die Küvette kann ein Spiegelelement umfassen, welches derart am Küvettenkörper angeordnet ist, dass die Primärstrahlung und / oder Sekundärstrahlung reflektiert werden kann. Besonders bevorzugt kann das Spiegelelement in Kombination mit der Kamera verwendet werden, sodass mit derselben Kamera auch gleichzeitig die Seitenfläche der Küvette beobachtet werden kann.

Erfindungsgemäss wird weiter eine Pipettiervorrichtung zur Durchführung des erfindungsgemässen Verfahrens vorgeschlagen. Die Pipettiervorrichtung umfasst einen Adapter zur Aufnahme der Küvette und ein mit der Küvette strömungsverbindbares Verdrängungselement zur Erzeugung einer Strömung zum Aufnehmen und / oder Ausstossen der fluiden Probe.

In einer weiteren Ausführungsform des erfindungsgemässen Verfahrens kann dann die Küvette an der Pipettenspitze angeordnet werden und die fluide Probe zur Analyse in die Küvette aufgenommen / eingebracht werden.

Die Küvette kann derart abnehmbar an der Pipettenspitze angeordnet sein, dass die Küvette über die Pipettenspitze mit dem Verdrängungselement strömungsverbunden ist, sodass die fluide Probe durch die mittels des Verdrängungselements erzeugbare Strömung in die Küvette aufnehmbar und / oder aus der Verlängerung ausstossbar ist.

Darunter dass die Pipettenspitze mit Verdrängungselement strömungsverbunden ist kann im Rahmen der Erfindung insbesondere Verstanden werden, dass ein Spitzeninnenraum der Pipettenspitze (welcher zur Aufnahme einer Flüssigkeit oder der fluide Probe geeignet ist) derart mit dem Verdrängungselement in Verbindung steht, dass durch dessen Betätigung über den Spitzeninnenraum eine Strömungsverbindung zur Küvette hergestellt werden kann (oder die fluide Probe oder eine Flüssigkeit in den Spitzeninnenraum aufgenommen werden kann falls die Küvette nicht an der Pipettiervorrichtung angeordnet ist). Darunter dass die Küvette über die Pipettenspitze mit dem Verdrängungselement strömungsverbunden ist, kann im Rahmen der Erfindung insbesondere verstanden werden, dass der Innenraum der Küvette (welcher auch zur Aufnahme der Flüssigkeit oder der fluide Probe geeignet ist) derart mit dem Spitzeninnenraum in Verbindung steht, dass durch Betätigung des Verdrängungselementes die fluide Probe (oder die Flüssigkeit) in den Innenraum aufgenommen werden kann, weil über den Spitzeninnenraum eine Strömungsverbindung zum Verdrängungselement vorliegt.

Unter «abnehmbar» kann im Rahmen dieser Anmeldung verstanden werden, dass sowohl die Pipettenspitze als auch die Küvette nicht fest befestigt sind, sondern leicht entfernt werden können und somit insbesondere als eine Einweg-Pipettenspitze / Küvette einfach abgenommen und entsorgt werden können.

Die Pipettenspitze kann einen speziell ausgeformte Befestigungsbereich umfassen, an welchem die Küvette dichtend an der Pipettenspitze angeordnet werden kann.

Ausserdem kann die Küvette einen Messbereich aufweisen, welcher speziell ausgeformt sein kann, wobei insbesondere ein Querschnittsprofil des Messbereiches rechteckig oder quadratisch ist. Hierbei kann die Küvette, die im Stand der Technik bekannten Masse einer Standardküvette aufweisen.

Erfindungsgemäss wird zudem ein Laborautomat zur Bearbeitung einer fluiden Probe vorgeschlagen, wobei Laborautomat einen Behandlungsraum zur Aufnahme der Küvette, die Pipettiervorrichtung umfasst. Weiter ist die Pipettiervorrichtung zur Durchführung mindestens eines Bearbeitungsschrittes an der fluiden Probe in dem Behandlungsraum angeordnet und der Laborautomat umfasst eine in mindestens einer ersten Raumrichtung des Behandlungsraumes bewegbar angeordnete Bewegungseinrichtung, welche Bewegungseinrichtung derart mit der Pipettiervorrichtung verbunden ist, dass die Pipettiervorrichtung mittels der Bewegungseinrichtung durch den Behandlungsraum bewegbar ist.

Ausserdem ist die Detektionsvorrichtung zur Analyse der fluiden Probe im Behandlungsraum angeordnet und der Laborautomat hat eine elektronische Steuereinrichtung, welche mit der Pipettiervorrichtung, der Bewegungseinrichtung und der Detektionsvorrichtung signalverbunden ist.

In der Praxis ist im Behandlungsraum in der Regel ein Behälter zur Aufnahme der fluiden Proben angeordnet. Insbesondere kann der Behälter eine Mikrotiterplatte sein, wobei die Mikrotiterplatte eine Vielzahl von Vertiefungen zur Aufnahme der fluiden Proben (beziehungsweise verschiedener fluiden Proben umfasst).

In der Praxis kann die Pipettiervorrichtung eine aus dem Stand der Technik bekannte Abwurfeinrichtung mit einer Antriebseinrichtung und einem Abwerfer aufweisen, um die Pipettenspitzen durch Betätigen des Antriebseinrichtung auszuwerfen, indem der Abwerfer so verlagert wird, dass er die Pipettenspitze von dem Aufnahmeelement löst, ohne dass diese vom Anwender berührt werden muss. Ausserdem kann die Abwurfeinrichtung einen Küvettenabwerfer aufweisen, um die Küvette durch Betätigen des Antriebseinrichtung auszuwerfen, indem der Küvettenabwerfer so verlagert wird, dass er die Küvette von der Pipettenspitze löst, ohne dass diese vom Anwender berührt werden muss. Hierfür kann der Küvettenabwerfer als eine Hülse ausgestaltet sein, welche sich um die Pipettenspitze zur Küvette bewegt und welche einen derart grösseren Radius als die Pipettenspitze aufweist und einen derart kleineren Radius als die Küvette aufweist, dass nur die Küvette ausgeworfen wird. Ausserdem könnte der Küvettenabwerfer einen Greifmechanismus umfassen, welcher die Pipettenspitze beim Auswerfen der Küvette fixiert. Durch den Küvettenabwerfer wird es ermöglicht, die Pipettenspitze nach Auswerfen der Küvette für weitere Schritte zu verwenden.

Dass die elektronische Steuereinrichtung mit der Pipettiervorrichtung, der Bewegungseinrichtung und der Detektionsvorrichtung signalverbunden ist, bedeutet, dass die Steuereinrichtung im Betriebszustand Steuersignale zur Durchführung der Bearbeitungsschritte an die Pipettiervorrichtung, die Bewegungseinrichtung und die Detektionsvorrichtung sendet. Ausserdem können auch Signale von der Pipettiervorrichtung, der Bewegungseinrichtung und der Detektionsvorrichtung empfangen werden.

Die Signalverbindung kann über eine Kabelverbindung oder kabellos erfolgen. Bei der kabellosen Signalverbindung erfolgt die Daten- / Signalübertragung über freien Raum (Luft bzw. Vakuum) als Übertragungsmedium. Die Übertragung kann durch gerichtete oder ungerichtete elektromagnetische Wellen erfolgen, wobei ein Bereich des zu verwendenden Frequenzbands je nach Anwendung und verwendeter Technik von wenigen Hertz (Niederfrequenz) bis hin zu mehreren hundert Terahertz (sichtbares Licht) variieren kann. Bevorzugt wird dabei Bluetooth oder WLAN verwendet. So kann nicht nur die Detektionsvorrichtung durch die Steuereinrichtung gesteuert werden, sondern nach der Analyse der fluiden Proben können die gemessenen Daten zur Auswertung an die Steuereinrichtung übertragen werden, um zum Beispiel eine Konzentration der fluiden Probe vor der weiteren Verarbeitung zu bestimmen.

Im Folgenden wird die Erfindung anhand von Ausführungsbeispielen unter Bezugnahme auf die Zeichnungen näher erläutert. Die Zeichnungen zeigen:
- Fig. 1: eine schematische Darstellung einer erfindungsgemässen Küvette;
- Fig. 2: eine schematische Darstellung eines erfindungsgemässen Laborautomaten;
- Fig. 3A-B: eine schematische Darstellung von Verfahrensschritte des erfindungsgemässen Verfahrens;
- Fig. 4 - 6: eine schematische Darstellung von einer Detektion des erfindungsgemässen Verfahrens.

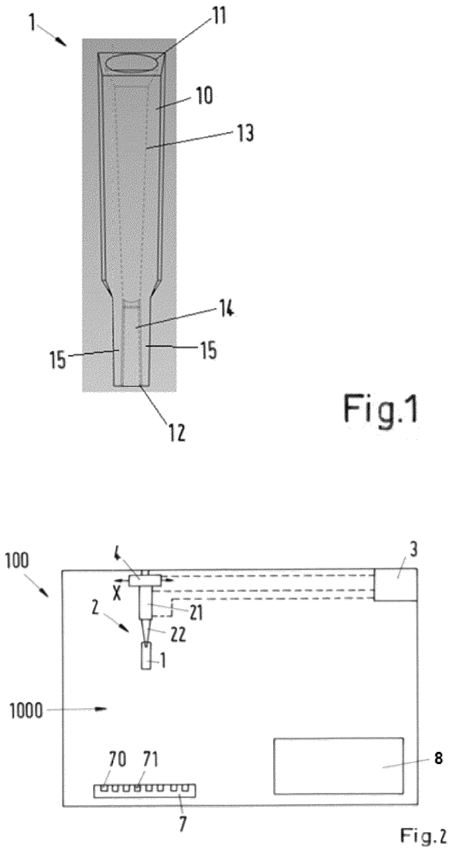

Fig. 1 zeigt eine schematische Darstellung einer Küvette 1 zur Durchführung des erfindungsgemässen Verfahrens.

Die Küvette 1 hat einen Küvettenkörper 10 mit einem Innenraum 14 zur Aufnahme einer fluiden Probe. Ausserdem hat die Küvette 1 eine obere Öffnung 11 zum Einfüllen und Entnehmen von Probenflüssigkeit und eine untere Öffnung 12 zur Analyse der fluiden Probe mittels Strahlung. Die untere Öffnung 12 ist an einer Bodenfläche der Küvette 1 angeordnet.

In erfindungsgemässen Verfahren wird die fluide Probe über die obere oder untere Öffnung in den Innenraum 14 eingebracht. Der untere Abschnitt der Küvette mit parallelen Wänden 15 (hier als Messfenster ausgestaltet) ist dabei der Messbereich der Küvette 1.

Ausserdem hat die Küvette 1 ein Aufnahmeelement 13 an der oberen Öffnung 11 (erstreckt sich von der oberen Öffnung 11 nach unten in den Innenraum 14), mittels welchem die Küvette 1 an einer Pipettenspitze oder Detektionsvorrichtung angeordnet werden kann. Hierfür ist das Aufnahmeelement 13 als konisch zulaufende Innenwand des Küvettenkörpers 10 ausgestaltet.

Fig. 2 zeigt eine schematische Darstellung eines erfindungsgemässen Laborautomaten 100.

Der Laborautomat 100 zur Bearbeitung einer fluiden Probe 71 umfasst einen Behandlungsraum 1000 zur Aufnahme der fluiden Probe 71 und eine erfindungsgemässe Pipettiervorrichtung 2, welche Pipettiervorrichtung 2 zur Durchführung mindestens eines Bearbeitungsschrittes an der fluiden Probe 71 in dem Behandlungsraum 1000 angeordnet ist.

Die Pipettiervorrichtung 2 zur Bearbeitung der fluiden Probe 71 umfasst dabei einen Adapter 21 sowie eine abnehmbar an dem Adapter 21 angeordnete Pipettenspitze 22 und ein mit der Pipettenspitze 12 strömungsverbundenes Verdrängungselement (welches in den Adapter 21 integriert ist) zur Erzeugung einer Strömung zum Aufnehmen und / oder Ausstossen der fluiden Probe 71.

Weiterhin umfasst die Pipettiervorrichtung 2 die Küvette 1, welche derart abnehmbar an der Pipettenspitze 22 angeordnet ist, dass die Küvette 1 über die Pipettenspitze 22 mit dem Verdrängungselement strömungsverbunden ist, sodass die fluide Probe 71 durch die mittels des Verdrängungselements erzeugbare Strömung in die Küvette 1 aufnehmbar und / oder aus der Küvette 1 ausstossbar ist.

Das Aufnehmen / Ausstossen kann über die obere Öffnung der Küvette 1 erfolgen, indem die fluide Probe 71 aus der Pipettenspitze 22 abgegeben wird oder in die Pipettenspitze 22 aufgenommen wird. Ausserdem kann die fluide Probe 71 durch die Strömungsverbindung auch direkt in die untere Öffnung der Küvette 1 aufgenommen werden beziehungsweise darüber abgegeben werden.

Ausserdem umfasst der Laborautomat 100 eine in mindestens eine Raumrichtung X des Behandlungsraumes 1000 bewegbar angeordnete Bewegungseinrichtung 4. Diese Bewegungseinrichtung 4 ist derart mit der Pipettiervorrichtung 2 verbunden, dass diese mittels der Bewegungseinrichtung 4 durch den Behandlungsraum 1000 bewegbar ist. In dem Behandlungsraum 1000 ist des Weiteren eine Detektionsvorrichtung 8 zur Analyse der fluiden Probe 71 sowie eine elektronische Steuereinrichtung 3, welche mit der Pipettiervorrichtung 2, der Bewegungseinrichtung 4 und der Detektionsvorrichtung 5 signalverbunden ist, angeordnet. Ausserdem befindet sich im Behandlungsraum 1000 ein Behälter 7 mit einer Vielzahl von Vertiefungen 70 zur Aufnahme der fluiden Proben 71.

Die Küvette 1 kann optisch transparent sein, da so ein seitliches Bestrahlen der fluiden Probe 71 in der Küvette 1 ermöglicht wird. Hierfür kann die Küvette in die Detektionsvorrichtung 8 (welche auch eine Strahlungsquelle für eine Primärstrahlung umfasst) eingesteckt werden. Prinzipiell kann die Küvette 1 aber auch über der Detektionsvorrichtung 8 (mit Strahlungsquelle) angeordnet werden. Die fluide Probe im Innenraum der Küvette 1 wird über die untere Öffnung von unten mit der Primärstrahlung bestrahlt und eine von der fluiden Probe 71 stammende Sekundärstrahlung ebenfalls über die untere Öffnung detektiert werden. Hierbei muss die Küvette 1 nicht optisch transparent sein. Die Materialauswahl ist daher flexibel und eine kostengünstige Auswahl des Materials ist möglich. So kann zum Beispiel eine Analyse über Detektion der Fluoreszenzstrahlung als Sekundärstrahlung erfolgen.

Die Schritte zur Bearbeitung / Analyse (Verfahren) der fluiden Probe 71 werden durch die elektronische Steuereinrichtung 3, welche mit der Pipettiervorrichtung 1, der Bewegungseinrichtung 4 und der Detektionsvorrichtung 8 signalverbunden ist, gesteuert. Durch die elektronische Steuereinrichtung 3 wird somit vorgegeben, dass die fluide Probe 71 durch Betätigung des Verdrängungsmechanismus in die Küvette 1 aufgenommen wird und zur Analyse mit der Küvette 1 in die Detektionsvorrichtung 8 eingeführt / zur Detektionsvorrichtung 8 geführt wird, sodass die fluide Probe 71 in der Küvette 1 analysiert werden kann.

Die Steuereinrichtung 3 kann im Betriebszustand also Steuersignale zur Durchführung verschiedener Bearbeitungsschritte an die Pipettiervorrichtung 2, die Bewegungseinrichtung 4 und die Detektionsvorrichtung 8 senden. Selbstverständlich kann die Steuereinrichtung 3 auch Signale von der Pipettiervorrichtung 2, der Bewegungseinrichtung 4 und der Detektionsvorrichtung 8 empfangen. Die Signalverbindung wird über die gestrichelten Linien angedeutet.

Nach der Analyse der fluiden Proben 71 werden die gemessenen Daten zur Auswertung von der Detektionsvorrichtung 8 an die Steuereinrichtung 3 übertragen.

Alternativ können die Bezugszeichen 21, 22 auch eine Detektionsvorrichtung (insbesondere mit Strahlungsquelle oder Kamera) darstellen, wobei keine weitere Detektionsvorrichtung im Behandlungsraum 1000 notwendig ist.

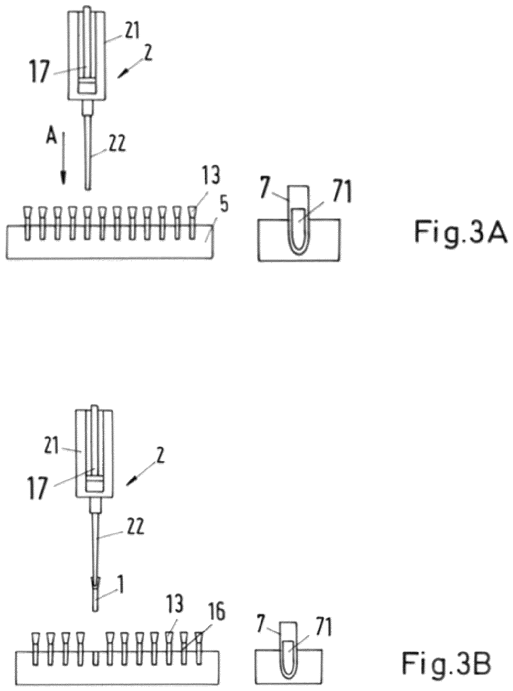

Fig. 3A und B zeigen eine schematische Darstellung von Schritten des erfindungsgemässen Verfahrens.

Die Pipettiervorrichtung 2 gemäss Fig. 3A-B umfasst dabei den Adapter 21 sowie eine abnehmbar an dem Adapter 21 angeordnete Pipettenspitze 22. Das Verdrängungselement 17 zur Erzeugung der Strömung zum Aufnehmen und / oder Ausstossen der fluiden Probe 71 (hier in einem Vorratsbehälter 7 dargestellt) ist in den Adapter 21 integriert und so mit der Pipettenspitze 22 strömungsverbunden. Das Verdrängungselement 17 ist als verschiebbarer Kolben ausgestaltet, welcher durch Bewegung entlang einer Ausbringachse A die Strömung in Form einer Luftpolsterverschiebung erzeugt.

In Fig. 3B wird die Küvette 1 auf die Pipettenspitze 22 aufgebracht. Hierfür umfasst die Küvette 1 das Aufnahmeelement 13, in welches die Pipettenspitze 22 eingeführt wird, wodurch die Küvette 1 von der Pipettiervorrichtung 2 aus der Aufbewahrung / Halterung 5 aufgenommen wird.

Ausserdem umfasst die Küvette 1 einen an dem Aufnahmeelement 13 angeordneten Messbereich 16, an welchem später die Analyse der fluiden Probe 71 durchgeführt wird.

Die fluide Probe 71 kann entweder aus der Pipettenspitze 22 in die Küvette 1 abgegeben werden (über die obere Öffnung) oder aus dem Vorratsbehälter 7 direkt in die Küvette (über die untere Öffnung) aufgenommen werden.

Im Gegensatz zu den Verfahrensschritten gemäss Fig. 3B wird die Küvette 1 in Fig. 3A nicht durch die Pipettenspitze 22 aufgenommen, sondern die Pipettiervorrichtung 2 wird zur Küvette 1 geführt. Dann wird die fluide Probe 71 aus der Pipettenspitze 22 über die obere Öffnung der Küvette 1 in den Innenraum der Küvette 1 eingebracht. Anschliessend kann die Analyse erfolgen.

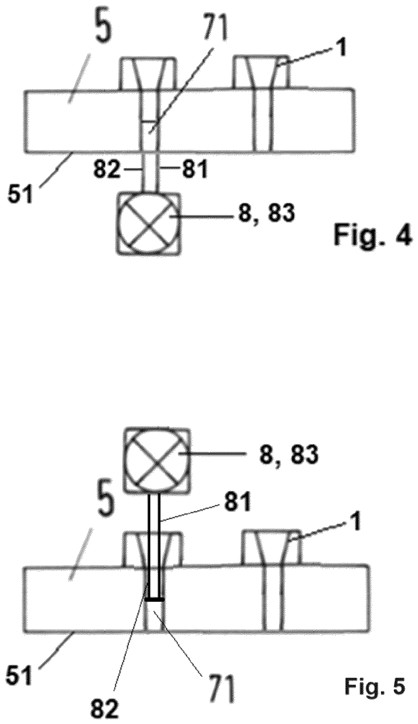

Fig. 4 bis 6 zeigen eine schematische Darstellung von einer Detektion des erfindungsgemässen Verfahrens. Die Küvette 1 beziehungsweise die Vielzahl der Küvetten 1 ist in einer Halterung 5 angeordnet.

Dabei wird die Strahlungsquelle 83 zur Bestrahlung der fluiden Probe 71 mit einer Primärstrahlung 81 und die Detektionsvorrichtung 8 zur Aufnahme einer von der fluiden Probe 71 stammenden Sekundärstrahlung 82 verwendet.

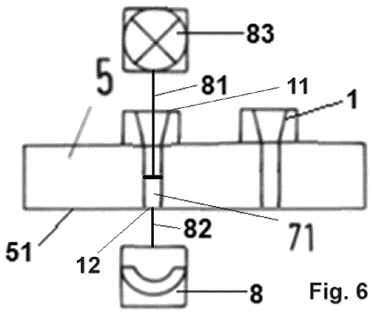

Bei Fig. 6 liegt die Strahlungsquelle 83 separat vor, wobei durch die obere Öffnung 11 und untere Öffnung 12 gestrahlt wird. Selbstverständlich ist bei Fig. 6 auch eine inverse Anordnung von Strahlungsquelle 83 und Detektionsvorrichtung 8 möglich.

Bei Fig. 4 und 5 ist die Strahlungsquelle 83 in die Detektionsvorrichtung 8 integriert.

Die fluide Probe 71 wird also durch die Strahlungsquelle 83 mit der Primärstrahlung 81 bestrahlt und die Detektionsvorrichtung 8 nimmt die von der fluiden Probe 71 stammenden Sekundärstrahlung 82 auf.

Die Strahlungsquelle 83 erzeugt die Primärstrahlung 81 bevorzugt als eine elektromagnetische Strahlung im UV/Vis-Bereich, insbesondere im Wellenlängenbereich von 190-1200nm, im Speziellen von 365-720nm. Die Sekundärstrahlung 82 ist insbesondere eine von der fluiden Probe 71 stammende elektromagnetischen Sekundärstrahlung 82, welche Sekundärstrahlung 82 durch eine Wechselwirkung der Primärstrahlung 81 mit der fluiden Probe 71 induziert ist.

Bei Fig. 6 hat die Küvette 1 die obere und untere Öffnung 11, 12. Als Messprinzip wird bei Fig. 6 eine Absorptionsmessung verwendet, wobei der bei dem Durchgang durch die Probe 71 geschwächte Lichtstrahl 82 (Sekundärstrahlung) mittels der Detektionsvorrichtung 8 an der unteren Öffnung 12 erfasst wird.

Die Küvette 1 kann insbesondere optisch transparent sein, da so ein seitliches Anstrahlen oder Durchstrahlen der fluiden Probe 71 in der Küvette 1 ermöglicht wird.

Als Messprinzip kann bei Fig. 4 und 5 eine Fluoreszenzmessung verwendet werden, wobei die Fluoreszenzstrahlung 82 der Probe 71 nach Bestrahlung der fluiden Probe 71 mit der Primärstrahlung 81 mittels der Detektionsvorrichtung 8 erfasst wird.

Hierfür wird die Detektionsvorrichtung 8 unter der Küvette 1 an der unteren Öffnung angeordnet. Dadurch, dass die Bestrahlung und Detektion an der unteren Öffnung / einer Öffnung erfolgen kann, wird vermieden, dass die Strahlung durch das Küvettenmaterial strahlen muss. So wird eine genauere Analyse, insbesondere mit höherer Strahlungsintensität, ermöglicht.

Die fluide Probe 71 im Innenraum der Küvette 1 wird bei Fig. 4 über die untere Öffnung von unten mit der Primärstrahlung 81 bestrahlt und die von der fluiden Probe 71 stammende Sekundärstrahlung 82 ebenfalls über die untere Öffnung detektiert.

Alternativ kann bei dem Aufbau gemäss Fig. 4 auch eine Kamera als Detektionsvorrichtung 8 verwendet werden. Dann ist die Primärstrahlung 81 normales Licht und die Halterung 5 umfasst einen transparenten Träger 51, auf welchem die Küvette 1 mit der unteren Öffnung abgestellt wird. Dabei kann zum Beispiel beobachten werden, wie sich Zellen auf dem Träger 51 absetzen. Auch bei Fig. 5 oder 6 ist die Verwendung einer Kamera möglich, wobei bei Verwendung einer Endoskopkamera die Endoskopkamera auch von oben in die Küvette eingeführt werden kann.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. Insbesondere können alle vorangehend beschriebenen Ausführungsformen und Ausführungen miteinander kombiniert werden. Ausserdem können im Stand der Technik bekannte Detektionsvorrichtungen zur Analyse verwendet werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

## Patentansprüche

1. Verfahren zur Analyse einer fluiden Probe (71) mittels Strahlung umfassend:
a) Bereitstellen einer Küvette (1) umfassend
einen Küvettenkörper (10) mit einem Innenraum (14) zur Aufnahme der fluiden Probe (71), sowie
eine obere Öffnung (11) zum Einfüllen und Entnehmen der fluiden Probe (71), und
eine untere Öffnung (12) zur Analyse der fluiden Probe (71) mittels der Strahlung;
b) Einbringen der fluiden Probe (71) in den Innenraum (14);
c) Bestrahlen der fluiden Probe (71) mit einer Primärstrahlung (81);
d) Analysieren der fluiden Probe (71) durch Aufnahme einer von der fluiden Probe (71) stammenden Sekundärstrahlung (82) über die untere Öffnung (12) und / oder die obere Öffnung (11) mittels einer Detektionsvorrichtung (8).

2. Verfahren nach Anspruch 1, wobei die Detektionsvorrichtung (8) derart an der unteren Öffnung (12) angeordnet wird, dass die Sekundärstrahlung (82) durch die untere Öffnung (12) aufgenommen wird.

3. Verfahren nach Anspruch 1 oder 2, wobei die Detektionsvorrichtung (8) derart an der oberen Öffnung (11) angeordnet wird, dass die Sekundärstrahlung (82) durch die obere Öffnung (11) aufgenommen wird.

4. Verfahren nach einem der vorangehenden Ansprüche, wobei eine Vielzahl von Küvetten (1) bereitgestellt wird, und die Vielzahl der Küvetten (1) zur Analyse in einer Halterung (5) angeordnet werden, wobei die Detektionsvorrichtung (8) derart von unten an die Vielzahl der Küvetten (1) geführt wird, dass die Sekundärstrahlung (82) durch die untere Öffnung (12) aufgenommen wird.

5. Verfahren nach Anspruch 4, wobei die Halterung (5) ein für die Strahlung durchlässiges Trägerelement (51) umfasst, und die Küvetten (1) mit der unteren Öffnung (12) derart auf dem Trägerelement (51) angeordnet werden, dass die Detektionsvorrichtung (8) zur Aufnahme der Sekundärstrahlung (82) an dem Trägerelement (51) angeordnet wird.

6. Verfahren nach einem der vorangehenden Ansprüche, wobei die Küvette (1) zum Einbringen der fluiden Probe (71) in den Innenraum (14) mit der oberen Öffnung an einer Pipettiervorrichtung (2) angeordnet wird und die fluide Probe (71) durch die Pipettiervorrichtung (2) in den Innenraum (14) eingebracht wird.

7. Verfahren nach einem der Ansprüche 1 bis 5, wobei der Küvettenkörper (10) an der oberen Öffnung (11) ein Aufnahmeelement (13) umfasst, und die Küvette (1) durch eine Transportvorrichtung (4), insbesondere eine Pipettiervorrichtung (2), im Speziellen durch eine Pipettenspitze (22) einer Pipettiervorrichtung (2), an dem Aufnahmeelement (13) aufgenommen wird.

8. Verfahren nach Anspruch 6 oder 7, wobei die Küvette (1) mittels der Pipettiervorrichtung (2) zur Detektionsvorrichtung (8) bewegt wird.

9. Verfahren nach einem der vorangehenden Ansprüche, wobei die fluide Probe (71) durch einen Druck oder eine Kapillarkraft im Innenraum (14) gehalten wird.

10. Verfahren nach einem der vorangehenden Ansprüche umfassend Bestimmung einer Konzentration der fluiden Probe (71) anhand der Sekundärstrahlung (82).

11. Küvette zur Durchführung eines Verfahrens nach einem der vorangehenden Ansprüche umfassend einen Küvettenkörper (10) mit einem Innenraum (14) zur Aufnahme der fluiden Probe (71), sowie eine oberen Öffnung (11) zum Einfüllen und Entnehmen der fluiden Probe (71), und
einer unteren Öffnung (12) zur Durchführung der Analyse der fluiden Probe (71) mittels der Strahlung.

12. Küvette nach Anspruch 11, wobei die untere Öffnung (12) an einem Boden des Küvettenkörpers (10) angeordnet ist.

13. Küvette nach Anspruch 11, wobei die untere Öffnung (12) an einer Seitenwand des Küvettenkörpers (10) angeordnet ist.

14. Küvette nach einem der Ansprüche 11 bis 13 umfassend ein Spiegelelement, welches derart am Küvettenkörper (10) angeordnet ist, dass die Primärstrahlung (81) und / oder Sekundärstrahlung (82) reflektiert werden kann.

15. Pipettiervorrichtung zur Durchführung eines Verfahrens nach einem der Ansprüche 1-10 umfassend
einen Adapter zur Aufnahme der Küvette (1), und
ein mit der Küvette (1) strömungsverbindbares Verdrängungselement (17) zur Erzeugung einer Strömung zum Aufnehmen und / oder Ausstossen der fluiden Probe (71).

16. Laborautomat zur Durchführung eines Verfahrens nach einem der Ansprüche 1-10 umfassend
einen Behandlungsraum (1000) zur Aufnahme der Küvette (1);
eine Pipettiervorrichtung (2), welche ein mit der Küvette (1) strömungsverbindbares Verdrängungselement (17) zur Erzeugung einer Strömung zum Aufnehmen und / oder Ausstossen der fluiden Probe (71) umfasst, wobei Pipettiervorrichtung (2) zur Durchführung mindestens eines Bearbeitungsschrittes an der fluiden Probe (71) in dem Behandlungsraum angeordnet ist;
eine in mindestens einer ersten Raumrichtung des Behandlungsraumes (1000) bewegbar angeordnete Bewegungseinrichtung (4), welche Bewegungseinrichtung (4) derart mit der Pipettiervorrichtung (2) verbunden ist, dass die Pipettiervorrichtung (2) mittels der Bewegungseinrichtung (4) durch den Behandlungsraum (1000) bewegbar ist,
eine in dem Behandlungsraum (1000) angeordnete Detektionsvorrichtung (8) zur Analyse der fluiden Probe (71); sowie
eine elektronische Steuereinrichtung (3), welche mit der Pipettiervorrichtung (2), der Bewegungseinrichtung (4) und der Detektionsvorrichtung (8) signalverbunden ist.

17. Laborautomat nach Anspruch 16, wobei die Detektionsvorrichtung (8) eine Strahlungsquelle (83) zur Bestrahlung der fluiden Probe (71) mit der Primärstrahlung (81) und einen Detektor (8) zur Aufnahme einer von der fluiden Probe (71) stammenden Sekundärstrahlung (82) umfasst.
